# EUROPÄISCHE PATENTSCHRIFT

(11) **EP 2 212 012 B1**
(45) Veröffentlichungstag und Bekanntmachung des Hinweises auf die Patenterteilung: **05.10.2016**
(21) Anmeldenummer: 08854514.0
(22) Anmeldetag: 20.10.2008
(51) Int. Cl.: B01D 53/90, B01D 53/94, F01N 3/20

(54) **VORRICHTUNG ZUM ZUMISCHEN EINES REDUKTIONSMITTELS IN EINEN ABGASSTROM EINER BRENNKRAFTMASCHINE**
DEVICE FOR MIXING A REDUCING AGENT INTO AN EXHAUST GAS FLOW OF AN INTERNAL COMBUSTION ENGINE
DISPOSITIF POUR AJOUTER UN AGENT DE RÉDUCTION À UN FLUX DE GAZ D'ÉCHAPPEMENT DANS UN MOTEUR À COMBUSTION INTERNE

(30) Priorität: 30.11.2007 DE 102007057837
(43) Veröffentlichungstag der Anmeldung: 04.08.2010
(73) Patentinhaber: Bayerische Motoren Werke Aktiengesellschaft, 80809 München (DE)
(72) Erfinder: TANGEMANN, Rüdiger, 4523 Neuzeug (AT); SCHÖNBERGER, Klaus, 4491 Niederneukirchen (AT); MAYR, Karl, A-4441 Behamberg (AT)
(86) Internationale Anmeldenummer: PCT/EP2008/008557
(87) Internationale Veröffentlichungsnummer: WO 2009/068136

(56) Entgegenhaltungen:
- DE-A1-102004 004 738
- DE-A1-102005 061 145
- DE-C1- 19 919 426
- DE-U1-202008 001 547
- FR-A- 2 900 440

## Beschreibung

Die Erfindung betrifft eine Vorrichtung zum Zumischen eines Reduktionsmittels in einen Abgasstrom einer Brennkraftmaschine mit den Merkmalen aus dem Oberbegriff des Patentanspruchs 1.

Zum technischen Umfeld wird beispielsweise auf die deutsche Offenlegungsschrift DE 40 38 054 A1 hingewiesen. In dieser ist eine Vorrichtung zum Zumischen eines Reduktionsmittels in einen Abgasstrom einer Brennkraftmaschine mit einem Abgasstrang und mit einer Dosiervorrichtung zur Zuführung des Reduktionsmittels in den Abgasstrang beschrieben. Weiter beinhaltet die Vorrichtung einen dreigeteilten Verdampfer zum Verdampfen des Reduktionsmittels, wobei der zuerst von dem Abgas durchströmte Teil aus einem Metallwabenkörper besteht, dessen Rippen von dem Abgas aufheizbar sind. Die Heizrippen des Metallwabenkörpers sind in der Strömungsrichtung des Abgases ausgerichtet angeordnet. Zur Zumischung des Reduktionsmittels ragt eine, um 90° gebogene Eindüsvorrichtung in den Abgasstrang. Durch diese Eindüsvorrichtung wird dem Abgas Reduktionsmittel beigegeben, welches auf den aufgeheizten Heizrippen verdampft und somit chemisch wirksam wird, um in einem speziellen Stickoxidreduktionskatalysator Stickoxide (NOₓ) zu eliminieren. Vorzugsweise wird als Reduktionsmittel eine Harnstoff-Wasserlösung bzw. Ammoniak verwendet.

Aus der deutschen, noch nicht veröffentlichten Patentanmeldung mit dem amtlichen Aktenzeichen DE 10 2006 049 620.5, ist ebenfalls eine Vorrichtung zum Zumischen eines Reduktionsmittels, wie z. B. einer Harnstoff-Wasserlösung oder Ammoniak, in den Abgasstrom einer Brennkraftmaschine bekannt. Gegenüber dem zuvor genannten Stand der Technik zeichnet sich die äußerst vorteilhafte Weiterbildung dadurch aus, dass die Dosiervorrichtung in oder an einem an den Abgasstrang angeordneten Hohlkörper angeordnet ist, dessen Innenvolumen abgasführend mit dem Abgasstrang verbunden ist. Durch die vorgeschlagene erfindungsgemäße Ausgestaltung wird ein besonders günstiger Strömungswiderstand, d. h. ein besonders kleiner Strömungswiderstand, erzielt und damit die Leistung der Brennkraftmaschine vergrößert.

Aus der deutschen Offenlegungsschrift DE 2005 061 1 45 A1, von der die vorliegende Erfindung ausgeht, ist eine gattungsgemässe Abgasnachbehandlungsvorrichtung bekannt. Die Abgasnachbehandlungsvorrichtung dient zum Zumischen eines Reduktionsmittels in den Abgasstrom einer Brennkraftmaschine zur Reduktion von NO-Bestandteilen im Abgas. Hierfür weist die Brennkraftmaschine einen Abgasstrang mit einer Dosiervorrichtung auf, zur Zuführung des Reduktionsmittels in den Abgasstrang. Die Dosiervorrichtung ist hierfür an einem an den Abgasstrang angeordneten Hohlkörper angeflanscht, dessen Innenvolumen abgasführend mit dem Abgasstrang verbunden ist. Zum Einbringen des Reduktionsmittels in das Abgas, ist das Reduktionsmittel in den Hohlkörper eindüsbar.

Allerdings kann es trotz der äußerst strömungsgünstigen Ausgestaltung zur Ablagerung von Reduktionsmittel an der Dosiervorrichtung bzw. an dem Hohlkörper kommen, was sich wiederum negativ auf den besonders günstigen Strömungswiderstand auswirken kann.

Aufgabe der Erfindung ist es, eine Maßnahme aufzuzeigen, mit der Ablagerungen von Reduktionsmittel verringert bzw. vermieden werden.

Diese Aufgabe wird durch die Merkmale im kennzeichnenden Teil des Patentanspruchs 1 gelöst.

Die erfindungsgemäße Ausgestaltung, die Kombination eines strömungsoptimierten Hohlkörpers in Verbindung mit dem erfindungsgemäßen Mantelkörper, der das Reduktionsmittel zumindest bereichsweise im Innenvolumen umhüllt, schafft hier Abhilfe.

Durch die Ausgestaltung gemäß Patentanspruch 2 können die Ablagerungen des Reduktionsmittels problemlos in einfacher Weise verdampft und somit rückstandslos und ungiftig für die Umwelt entfernt werden. Die Heizung hat die Aufgabe, den Mantelkörper in einem gewünschten Temperaturbereich zu halten. Dabei gibt es grundsätzlich zwei Heizstrategien. Bei hohen Temperaturen über 300°C können die Ablagerungen quasi abgebrannt werden. Ansonsten kann die Heizung dazu verwendet werden, die Temperatur so einzustellen, dass eine katalytische Beschichtung optimal wirken kann. Dazu sind Temperaturen von über 200°C notwendig. Die Heizung kann beispielsweise elektrisch über einen Heizleiter, der um den Mantelkörper gewickelt ist, erfolgen. Bei einer ausreichend großen Temperaturabhängigkeit des elektrischen Widerstandes des Heizleiters kann eine Temperaturregelung ohne eine zusätzliche Sensorik ausgeführt werden. Der Mantelkörper kann aber auch so ausgelegt werden, dass eine Aufheizung über das vorbeiströmende Abgas möglich ist.

Die Ausgestaltungen gemäß der Patentansprüche 3 und 4 wirken als Hydrolysekatalysator für die Reduktionszerfallsprodukte. Besonders bevorzugt sind als katalytische Beschichtungen z. B. eine Titandioxid- (TiO₂) oder eine Aluminiumoxidbeschichtung (Al₂O₃) denkbar. Katalytische Beschichtungen können nur wirken, wenn sie hinreichend große Fläche haben und der erforderliche Temperaturbereich eingehalten wird. Durch die Oberfläche des Mantelkörpers wird die notwendige Beschichtungsfläche sichergestellt. Da der Mantelkörper gemäß Patentanspruch 2 besonders bevorzugt auch von Abgas umspülbar, bzw. elektrisch beheizbar ist, wird die Temperatur der Beschichtung entsprechend hochgehalten.

Unterstützt wird das gewünschte thermische Verhalten des Mantelkörpers durch die Ausgestaltung gemäß Patentanspruch 5.

Eine besonders bevorzugte Ausgestaltung zur thermischen Isolation ist gemäß Patentanspruch 6 die Luftspaltisolierung.

Durch eine entsprechende Ausformung des Mantelkörpers gemäß Patentanspruch 7 wird die Dosiervorrichtung vor heißem Abgas geschützt und ein sog. Flash-boiling (schlagartiges Verdampfen) des Reduktionsmittels durch eine zu hohe Temperatur an der Dosiervorrichtung verhindert.

Im Folgenden ist die Erfindung anhand eines einzigen, besonders bevorzugten Ausführungsbeispieles in einer einzigen Figur näher erläutert.

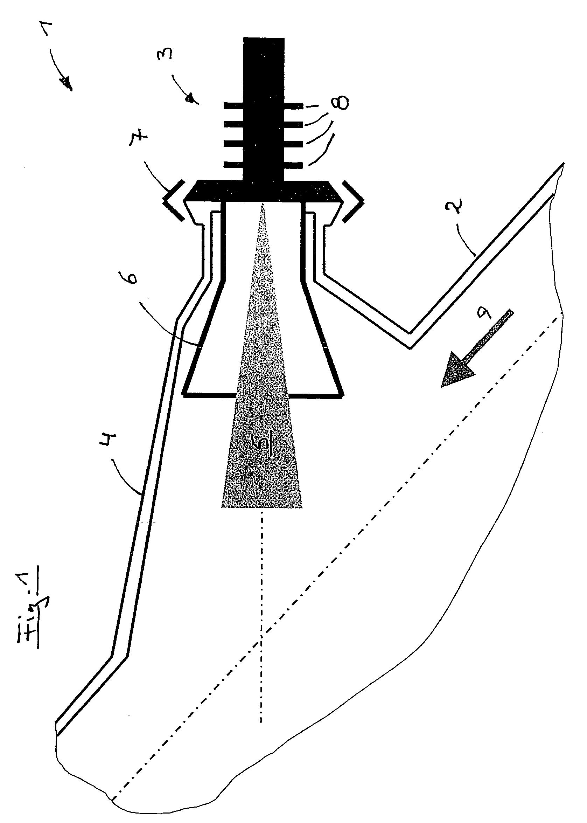

- Fig. 1: zeigt einen Schnitt durch eine Vorrichtung zum Zumischen eines Reduktionsmittels in einen Abgasstrom einer Brennkraftmaschine.

Fig. 1 zeigt einen Schnitt durch eine Vorrichtung 1 zum Zumischen eines Reduktionsmittels 5 in einen Abgasstrom einer Brennkraftmaschine. Die Vorrichtung 1 dient der Abgasnachbehandlung von Brennkraftmaschinen, insbesondere Dieselbrennkraftmaschinen zur Reduzierung von emittierten Stickoxiden durch Eindüsen eines Reduktionsmittels 5, wie beispielsweise einer wässrigen Harnstofflösung oder Ammoniak. Sie ist auch mit einem nachgeschalteten DeNoₓ-Katalysator, z. B. einem SCR-Katalysator (selective catalytic reduction) oder einem NSCR-Katalysator (non selective catalytic reduction) kombinierbar.

Die Vorrichtung 1 besteht im Wesentlichen aus einer Dosiervorrichtung 3, die an einem weitestgehend topfförmigen Hohlkörper 4 angeordnet ist, der seinerseits wiederum an einen Abschnitt eines Abgasstrangs 2 der Brennkraftmaschine angeordnet ist, wobei ein Innenraum des Hohlkörpers 4 mit dem Abgasstrang 2 gasführend verbunden ist. Eine Strömungsrichtung eines Abgases der Brennkraftmaschine ist mit einem Pfeil 9 gekennzeichnet. Mit der Dosiervorrichtung 3 wird das Reduktionsmittel 5 durch Eindüsen oder Einspritzen in etwa kegelförmig in den Abgasstrang 2 der nicht dargestellten Brennkraftmaschine eingebracht, wobei die Kegelform durch strömendes Abgas auch stark deformiert werden kann. Die Dosiervorrichtung 3 ist über ein Befestigungselement 7 an dem Hohlkörper 4 angeflanscht. Um eine Temperaturstabilisierung der Dosiervorrichtung 3 zu gewährleisten, d. h. eine Überhitzung zu vermeiden, weist sie radial an ihrem Außenumfang Kühlkörper 8 auf. Hiermit wird erreicht, dass eine Ventilspitze der Dosiervorrichtung 3 nicht über 120°C erreicht, damit der Effekt des Flash-boilings, bei dem das Reduktionsmittel unkontrolliert zerstäubt wird, vermieden wird. Als Reduktionsmittel kommen z. B. Ammoniak (NH₃) oder eine (wässrige) Harnstofflösung (H₂NCONH₂) zum Einsatz. Insbesondere bei Verwendung einer wässrigen Harnstofflösung kann es zu Ablagerungen von Reduktionsmittel 5 an der Dosiervorrichtung 3, dem Hohlkörper 4 und dem Abgasstrang 2 kommen. Hierbei finden vor allem folgende Nebenreaktionen statt:
- Bei ca. 152°C kann es zur Bildung von reaktiver Isocyansäure aus der Hydrolyse von Harnstoff kommen und zu einer Bildung von Biuret.
- Bei ca. 175°C setzt gleichzeitig die Bildung von Isocyanursäure und Ammelid ein, wobei die Reaktionsgeschwindigkeiten sehr gering sind.
- Bei ca. 193°C setzt die Biuretzersetzung ein, oberhalb der Zersetzungstemperatur von Harnstoff. Hierdurch zersetzt sich der Hamstoff weiter zu Ammoniak und Isocyansäure.
- Weiter kommt es bei ca. 193°C zur Trimerisierung (Als Trimerisierung bezeichnet man die Vereinigung von drei Molekülen, den Monomeren, zu einem Trimer.) von Isocyansäure zu Cyanursäure und es bildet sich Ammelid.
- Bei ca. 225°C wird Ammelin gebildet, jedoch langsamer als Cyanursäure oder Ammelid.
- Bei ca. 325°C setzt eine vollständige Zersetzung von Biuret ein und Melamin wird gebildet.
- Bei Temperaturen von ca. 320°C bis ca. 380°C wird Cyanursäure zu Isocyansäure zersetzt, d. h. die Ablagerungen verdampfen und lösen sich auf.

Die o. g. chemischen Prozesse führen somit zu einer Anhäufung von Ablagerungen bei bestimmten Fahrprofilen (z. B. viele Kurzstrecken oder viel Betrieb in der unteren bis mittleren Teillast der Brennkraftmaschine), wodurch eine optimale Abgasnachbehandlung zur Reduzierung der Stickoxide ohne die erfindungsgemäße Ausgestaltung kaum mehr möglich ist.

Aus diesem Grund ist erfindungsgemäß vorgesehen, dass zwischen dem Hohlkörper 4 und dem eingedüsten oder eingespritzten Reduktionsmittel 5 ein Mantelkörper 6 angeordnet ist, der das Reduktionsmittel 5 zumindest bereichsweise im Innenvolumen umhüllt. Bevorzugt ist der Mantelkörper 6 durch das Abgas und/oder elektrisch beheizbar. Die Heizung hat die Aufgabe, den Mantelkörper 6 in einem gewünschten Temperaturbereich zu halten. Dabei gibt es grundsätzlich zwei Heizstrategien. Bei hohen Temperaturen über 300°C können die Ablagerungen quasi abgebrannt werden. Ansonsten kann die Heizung dazu verwendet werden, die Temperatur so einzustellen, dass eine nachfolgend erwähnte katalytische Beschichtung optimal wirken kann. Dazu sind Temperaturen von etwa 200°C notwendig. Die elektrische Heizung kann beispielsweise über einen Heizleiter, der um den Mantelkörper 6 gewickelt ist, erfolgen. Bei einer ausreichend großen Temperaturabhängigkeit des elektrischen Widerstandes des Heizleiters kann eine Temperaturregelung ohne eine zusätzliche Sensorik ausgeführt werden. Der Mantelkörper 6 kann aber auch so ausgelegt werden, dass eine Aufheizung über das vorbeiströmende Abgas möglich ist.

In einer weiteren besonders bevorzugten Ausführungsform ist der Mantelkörper 6 zumindest bereichsweise katalytisch beschichtet. Die katalytisch wirkende Beschichtung wirkt als Hydrolysekatalysator für die Reduktionsmittelzerfallsprodukte. Als katalytische Beschichtung ist z. B. eine Titandioxid-(TiO₂) oder eine Aluminiumoxidbeschichtung (Al₂O₃) denkbar. Katalytische Beschichtungen können nur wirken, wenn sie eine hinreichend große Fläche haben und wie oben dargestellt, der erforderliche Temperaturbereich eingehalten wird. Durch die Größe (Oberfläche) des Mantelkörpers 6 wird die notwendige Größe der Beschichtung sichergestellt. Da der Mantelkörper 6 auch von Abgas umspült wird, wird die Temperatur der Beschichtung bei normalem Fahrbetrieb entsprechend hoch gehalten.

Besonders bevorzugt ist der Mantelkörper 6 zumindest bereichsweise thermisch isoliert. Besonders bevorzugt ist der Mantelkörper 6 mit einem Luftspalt, einer sog. Luftspaltisolation, isoliert, wie sie beispielsweise aus dem Bau von Abgasanlagen bekannt ist.

Des Weiteren ist der Mantelkörper 6 besonders bevorzugt derart ausgeformt, dass die Dosiervorrichtung 3 selbst, insbesondere der Eindüs- oder Einspritzbereich, von einer direkten Beaufschlagung mit heißem Abgas geschützt ist.

Der Mantelkörper 6 wird aus einem temperaturfesten Material, wie z. B. einem Metall (Edelstahl etc.) oder einer Keramik hergestellt und durch Kraft- und/oder Formschluss und/oder Materialschluss in der Vorrichtung 1 befestigt.

Im vorliegenden Ausführungsbeispiel umschließt der Mantelkörper 6 das Reduktionsmittel im Hohlkörper 4 weitgehend vollständig konusförmig, in weiteren Ausführungsformen kann die Gestalt auch von der rotationssymmetrischen Form abweichen, bzw. der Mantelkörper 6 kann auch strömungsgünstige Durchbrüche, Ausklinkungen oder Umformungen aufweisen. Auch die Konizität des Mantelkörpers 6 kann in weiteren Ausführungsformen stärker oder weniger stark ausgeprägt sein.

Auch der Abstand der Dosiervorrichtung 3 von dem Abgasstrang 2 kann in weiteren Ausführungsbeispielen größer oder kleiner sein.

Durch die erfindungsgemäße Ausgestaltung werden somit Ablagerungen des Reduktionsmittels 5 am Hohlkörper 4, dem Abgasstrang 2 aber auch an der Dosiervorrichtung 3 selbst verhindert und damit die Emissionsstabilität der Brennkraftmaschine, bzw. des Fahrzeugs über eine sehr lange Lebensdauer sichergestellt.

### Bezugszeichenliste:

- 1.: Vorrichtung
- 2.: Abgasstrang
- 3.: Dosiervorrichtung
- 4.: Hohlkörper
- 5.: Reduktionsmittel
- 6: Mantelkörper
- 7.: Befestigungselement
- 8.: Kühlkörper
- 9.: Strömungsrichtung

## Patentansprüche

1. Vorrichtung (1) zum Zumischen eines Reduktionsmittels (5) in einen Abgasstrom einer Brennkraftmaschine mit einem Abgasstrang (2) und mit einer Dosiervorrichtung (3) zur Zuführung des Reduktionsmittels (5) in den Abgasstrang (2), wobei die Dosiervorrichtung (3) in oder an einem an den Abgasstrang (2) angeordneten Hohlkörper (4) angeordnet ist, dessen Innenvolumen abgasführend mit dem Abgasstrang (2) verbunden ist und wobei das Reduktionsmittel (5) in den Hohlkörper (4) eindüsbar ist,
**dadurch gekennzeichnet dass** zwischen dem Hohlkörper (4) und dem eingedüsten Reduktionsmittel (5) ein Mantelkörper (6) vorgesehen ist, der das Reduktionsmittel (5) zumindest bereichsweise im Innenvolumen umhüllt.

2. Vorrichtung nach Patentanspruch 1,
**dadurch gekennzeichnet, dass** der Mantelkörper (6) elektrisch und/oder durch ein Abgas beheizbar ist.

3. Vorrichtung nach Patentanspruch 1 oder 2,
**dadurch gekennzeichnet, dass** der Mantelkörper (6) zumindest bereichsweise katalytisch beschichtet ist.

4. Vorrichtung nach Patentanspruch 3,
**dadurch gekennzeichnet, dass** die katalytische Beschichtung Titandioxid (TiO₂) oder Aluminiumoxid (Al₂O₃) ist.

5. Vorrichtung nach zumindest einem der Patentansprüche 1 bis 4,
**dadurch gekennzeichnet, dass** der Mantelkörper (6) zumindest bereichsweise thermisch isoliert ist.

6. Vorrichtung nach Patentanspruch 5,
**dadurch gekennzeichnet, dass** der Mantelkörper (6) mit einem Luftspalt isoliert ist.

7. Vorrichtung nach einem der zuvor genannten Patentansprüche, **dadurch gekennzeichnet, dass** der Mantelkörper (6) derart ausgeformt ist, dass die Dosiervorrichtung (3) vor heißem Abgas geschützt ist.

## Claims

1. A device (1) for admixing a reducing agent (5) into a flow of exhaust gas of an internal combustion engine having an exhaust tract (2) and with a metering device (3) for feeding the reducing agent (5) Into the exhaust tract (2), wherein the metering device (3) is arranged in or on a hollow body (4) which is positioned on the exhaust tract (2) and the Internal volume of which is connected to the exhaust tract (2) such that it conducts the exhaust gas and wherein the reducing agent (5) can be Injected into the hollow body (4),
**characterised In that** provided between the hollow body (4) and the injected reducing agent (5) Is a casing body (6) which sheathes the reducing agent (5) at least In some regions in the internal volume.

2. A device according to claim 1,
**characterised in that** the casing body (6) can be heated electrically and/or by an exhaust gas.

3. A device according to claim 1 or claim 2,
**characterised in that** the casing body (6) is coated catalytically at least in some regions.

4. A device according to claim 3,
**characterised in that** the catalytic coating is titanium dioxide (TiO₂) or aluminium oxide (Al₂O₃).

5. A device according to at least one of claims 1 to 4,
**characterised In that** the casing body (6) Is thermally insulated at least In some regions,

6. A device according to claim 5,
**characterised In that** the casing body (6) is insulated by an air gap.

7. A device according to any one of the aforementioned claims,
**characterised in that** the casing body (6) Is formed such that the metering device (3) is protected against hot exhaust gas.

## Revendications

1. Dispositif (1) permettant d'ajouter par mélange un agent réducteur (5) dans la ligne des gaz d'échappement d'un moteur à combustion interne, comprenant une ligne de gaz d'échappement (2) et un dispositif doseur (3) permettant d'introduire l'agent réducteur (5) dans la ligne des gaz d'échappement (2), ce dispositif doseur (3) étant monté dans ou sur un corps creux (4) monté sur la ligne des gaz d'échappement (2), et dont le volume interne est relié à la ligne des gaz d'échappement (2) en permettant le passage des gaz d'échappement, l'agent réducteur (5) pouvant être injecté dans le corps creux (4),
**caractérisé en ce que**
entre le corps (4) et l'agent réducteur (5) injecté, il est prévu un corps enveloppe (6) qui entoure l'agent réducteur (5) au moins par zones dans le volume interne.

2. Dispositif conforme à la revendication 1,
**caractérisé en ce que**
le corps enveloppe (6) peut être chauffé électriquement et/ou par les gaz d'échappement.

3. Dispositif conforme à la revendication 1 ou 2,
**caractérisé en ce que**
le corps enveloppe (6) est revêtu au moins par zones d'un revêtement catalytique.

4. Dispositif conforme à la revendication 3,
**caractérisé en ce que**
le revêtement catalytique est du dioxyde de titane (TiO₂) ou de l'oxyde d'aluminium (Al₂O₃).

5. Dispositif conforme à au moins l'une des revendications 1 à 4,
**caractérisé en ce que**
le corps enveloppe (6) est isolé thermiquement au moins par zones.

6. Dispositif conforme à la revendication 5,
**caractérisé en ce que**
le corps enveloppe (6) est isolé par un intervalle d'air.

7. Dispositif conforme à l'une des revendications précédentes,
**caractérisé en ce que**
le corps enveloppe (6) est formé de sorte que le dispositif doseur (3) soit protégé des gaz d'échappement chauds.
